Europäisches Patentamt

European Patent Office

Office européen des brevets

(19)

(11) Numéro de publication : **0 171 059
B1**

# FASCICULE DE BREVET EUROPÉEN

(45) Date de publication du fascicule du brevet :
26.04.89

(21) Numéro de dépôt : 85109865.7

(22) Date de dépôt : 06.08.85

(51) Int. Cl.⁴ : **F 16 L 3/16**, F 16 L 3/18,
F 16 L 59/12

(54) **Dispositif de supportage d'une tuyauterie de faible épaisseur.**

(30) Priorité : 08.08.84 FR 8412539

(43) Date de publication de la demande :
12.02.86 Bulletin 86/07

(45) Mention de la délivrance du brevet :
26.04.89 Bulletin 89/17

(84) Etats contractants désignés :
BE DE FR GB IT NL

(56) Documents cités :
DE--A-- 2 516 092
DE--C-- 482 629
FR--A-- 2 339 800
FR--A-- 2 445 923
US--A-- 1 735 192
US--A-- 4 004 768

(73) Titulaire : STEIN INDUSTRIE Société Anonyme dite:
19-21, avenue Morane Saulnier
F-78140 Vélizy Villacoublay (FR)

(72) Inventeur : Semedard, Jean-Claude
c/o STEIN INDUSTRIE Boite Postale 74
F-78141 Vélizy Villacoublay Cédex (FR)
Inventeur : Marsault, Jean-Jacques
23 rue Corps Saints
F-78730 St Arnoult en Yvelines (FR)
Inventeur : Peyrelongue, Jean-Pierre
2 Square Francis Jammes
F-78760 Pontchartrain (FR)
Inventeur : Vallee, Gérard
47 avenue du Général Leclerc
F-78220 Viroflay (FR)

(74) Mandataire : Weinmiller, Jürgen et al
Lennéstrasse 9 Postfach 24
D-8133 Feldafing (DE)

Jouve, 18, rue St-Denis, 75001 Paris, France

EP 0 171 059 B1

# Description

La présente invention concerne un dispositif de supportage d'une tuyauterie d'épaisseur faible par rapport à son diamètre et soumise à des variations de température importantes et à un effort de traction radial de direction connue, comprenant des berceaux de support, de profil interne à rayon de courbure voisin de celui de la tuyauterie, un demi-collier rigide disposé autour de la tuyauterie et espacé de son pourtour, et sur lequel est fixé au moins un berceau, au moins un bras articulé sur une extrémité du demi-collier et sur lequel est fixé au moins un autre berceau.

La Demanderesse a proposé dans ses brevets FR-A-2 443 011 et FR-A-2 499 202 des dispositifs qui conviennent notamment pour le supportage ou la fixation de tuyauteries de transport de sodium liquide dans des centrales à réacteur nucléaire surrégénérateur.

Ces dispositif comportent des organes de reprise d'efforts soudés sur la tuyauterie, formés par des taquets circulaires venant s'engager dans des trous de lames élastiques soudées à l'une au moins de leurs extrémités à des fers radiaux solidaires d'un collier rigide entourant la tuyauterie. Ils nécessitent un nombre de soudures relativement important, de sorte que leur mise en place est longue et onéreuse.

La Demanderesse a également proposé dans sa demande de brevet FR-A-2 565 316 un dispositif qui maintient la tuyauterie sans jeu et sans y engendrer de contraintes excessives, quels que soient les dilatations diamétrales et efforts appliqués, sans nécessiter des dispositifs de reprise d'effort soudés sur la tuyauterie, qui est d'une mise en place facile et rapide, et qui permet un réglage du degré de serrage de la tuyauterie.

Ce dernier dispositif est conçu pour la fixation d'une tuyauterie soumise à des variations de températures importantes et à des efforts radiaux d'orientation quelconque. Il convient a fortiori pour le supportage d'une tuyauterie soumise à des variations de températures importantes et à un effort de traction radial de direction connue. Mais il est un peu complexe.

Le document US-A-1 735 192 décrit un dispositif de supportage d'une tuyauterie d'épaisseur faible par rapport à son diamètre, et soumise à des variations de température importantes et à un effort de traction radial de direction connue. Il comprend des berceaux de support de profil interne à rayon de courbure voisin de celui de la tuyauterie, un demi-collier rigide disposé autour de la tuyauterie et espacé de son pourtour et sur lequel est fixé un berceau, et un bras articulé sur une extrémité du demi-collier et sur lequel est fixé un autre berceau. L'extrémité de ce bras opposée à son articulation est sollicitée vers l'extrémité correspondante du demi-collier par un boulon de serrage muni d'un ressort antagoniste.

Un tel dispositif ne permet pas de supporter une tuyauterie d'épaisseur faible par rapport à son diamètre sans imprimer à celle-ci une certaine ovalisation, du fait de la dissymétrie des efforts qu'il exerce sur la tuyauterie. Il nécessite un contrôle précis de l'effort de serrage exercé sur le boulon de jonction entre le demi-collier et le bras articulé, sous peine de risquer de soumettre la tuyauterie à une déformation permanente.

La présente invention a pour but de procurer un dispositif de supportage d'une telle tuyauterie, qui maintienne celle-ci sans jeu et sans engendrer de contraintes excessives susceptibles de la déformer de façon permanente et notamment de l'ovaliser, quels que soient les dilatations diamétrales et l'effort de traction radial appliqué dans une direction connue, qui soit de mise en place facile et rapide, et qui permettre le calorifugeage de la tuyauterie même à l'endroit où il est disposé.

Le dispositif selon l'invention est caractérisé en ce qu'au moins deux berceaux sont fixés sur le demi-collier rigide, en ce qu'il comporte deux bras symétriques articulés chacun sur l'une des extrémités du demi-collier, et sur chacun desquels est fixé au moins un autre berceau, et en ce qu'il comporte en outre un dispositif de liaison formé de deux autres bras articulés d'une part sur les bras précédents, d'autre part sur un axe sur lequel s'exerce l'effort de traction radial appliquant un serrage sur la tuyauterie indépendamment des dilatations de la tuyauterie.

Il répond en outre de préférence à au moins l'une des caractéristiques suivantes :

- Le rayon de courbure du profil interne des berceaux est légèrement supérieur à celui de la tuyauterie à froid.
- Les berceaux sont revêtus sur leur face de contact avec la tuyauterie d'une couche d'un matériau susceptible d'un écrasement élastique et résistant à la chaleur.
- Le matériau susceptible d'un écrasement élastique est un tricot comprimé d'un fil métallique fin.
- Les berceaux sont fixés à pivotement sur le demi-collier rigide et sur les bras articulés.
- Les berceaux, le demi-collier et les bras articulés sont disposés à l'intérieur d'un calorifuge entourant la tuyauterie, et le dispositif de liaison ressort à l'extérieur de ce calorifuge.
- Le dispositif de liaison est relié à des organes de supportage statique par une chape fixée sur lui-même.

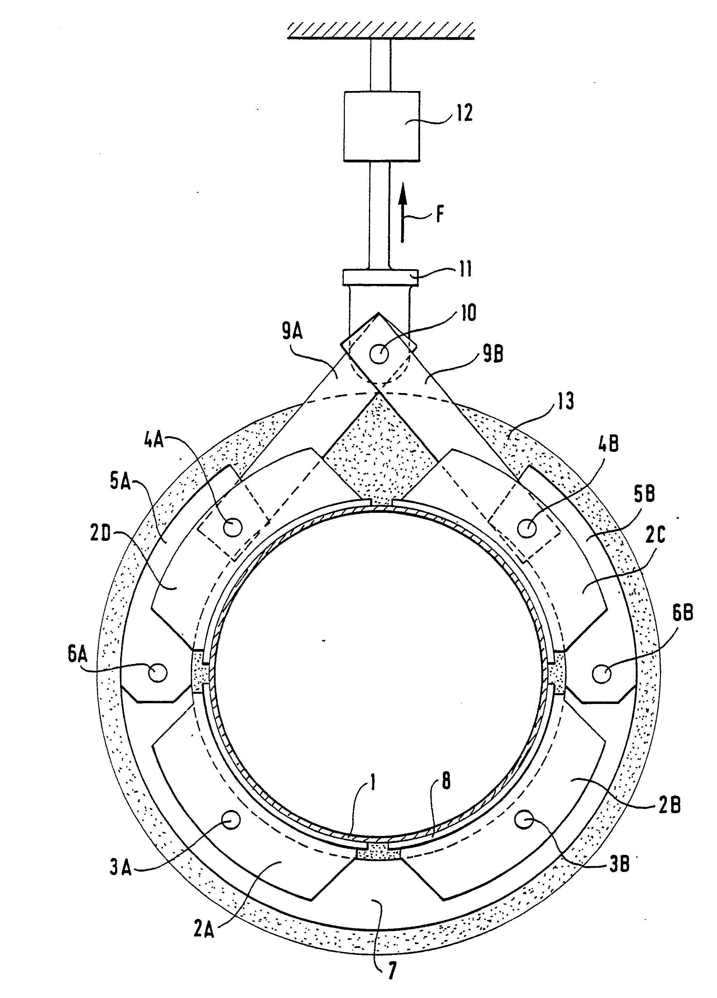

Il est décrit ci-après, à titre d'exemple et en référence à la figure unique du dessin annexé, un dispositif de supportage d'une tuyauterie de transport de métal alcalin fondu, tel que du sodium, pour centrale de production d'électricité à réacteur surrégénérateur. On sait que la température de telles tuyauteries peut varier très rapidement, de 100° ou 200 °C en quelques minutes.

La figure représente le dispositif en coupe diamétrale (selon une section droite de la tuyauterie).

La tuyauterie 1 de grand diamètre, de l'ordre de 700 à 1000 mm, et de faible épaisseur de paroi, de 10 à 20 mm, est enserrée par quatre berceaux 2A, 2B, 2C, 2D, répartis régulièrement sur son pourtour, de rayon de courbure légèrement supérieur à celui de la tuyauterie à froid, et pouvant être égal au rayon maximal de la tuyauterie à chaud. Les berceaux inférieurs 2A, 2B sont solidaires par l'intermédiaire d'axes de pivotement 3A, 3B d'un demi-collier rigide 7. Les deux autres berceaux 2C, 2D sont solidaires par l'intermédiaire de pivots 4A, 4B de deux bras 5A, 5B articulés en 6A, 6B sur le demi-collier rigide 7. Tous les berceaux sont revêtus sur leur face du côté de la tuyauterie d'une couche 8 de matériau susceptible d'écrasement élastique et résistant à la chaleur, tel qu'un tricot comprimé d'un fil fin d'acier inoxydable, qui résiste à 500 °C an conservant ses propriétés.

Un dispositif de liaison, constitué de deux bras 9A et 9B articulés en 10 et solidaires des bras articulés 5A et 5B par l'intermédiaire des pivots 4A et B, tend à rapprocher les bras articulés 5A et 5B dans la mesure où l'angle formé par les bras 9A et 9B avec respectivement 5A et 5B est choisi correctement. Ceci permet d'appliquer les berceaux 2C et 2D sur la tuyauterie avec une force de serrage dépendant de la force de traction appliquée en 10 et des caractéristiques géométriques du dispositif de supportage.

Une chape 11 solidaire du pivot 10 permet l'accrochage du dispositif de supportage à un organe de supportage 12 tel que des supports variables ou constants.

La tuyauterie est entourée d'un calorifuge 13 dans lequel sont noyés les berceaux, le demi-collier, les bras 5A et 5B et la majeure partie des bras 9A et 9B, et à l'extérieur duquel se trouvent seuls la chape 11 et le pivot 10.

On voit que si la tuyauterie vient à se dilater ou à se contracter radialement par suite d'un changement de température du métal liquide qui y circule, le maintien rigide sans jeu de la tuyauterie est conservé par l'action de la force F.

La possibilité de pivotement autour des axes 3A, 3B, 4A, 4B laissée aux berceaux 2A, 2B, 2C, 2D permet de conserver un contact centré entre la tuyauterie et ces berceaux quels que soient les écarts de forme de la tuyauterie et les petites déformations thermiques du demi-collier 7. Par ailleurs, la disposition des quatre berceaux à 90° les uns des autres permet de compenser une tendance à l'ovalisation de la tuyauterie sous l'effort de serrage.

Bien que le dispositif qui vient d'être décrit en référence à la figure du dessin paraisse la forme de réalisation préférable de l'invention, on comprendra que diverses modifications peuvent lui être apportées sans sortir du cadre de cette dernière, certains organes pouvant être remplacés par d'autres qui joueraient un rôle technique analogue. En particulier, le nombre de berceaux peut être modifié. Le demi-collier pourrait occuper une fraction du pourtour de la tuyauterie supérieure ou inférieure à 180°. Le nombre de bras articulés pourrait être supérieur.

## Revendications

1. Dispositif de supportage d'une tuyauterie d'épaisseur faible par rapport à son diamètre et soumise à des variations de température importantes et à un effort de traction radial (F) de direction connue, comprenant des berceaux de support (2A, 2B, 2C, 2D), de profil interne à rayon de courbure voisin de celui de la tuyauterie, un demi-collier (7) rigide disposé autour de la tuyauterie et espacé de son pourtour, et sur lequel est fixé au moins un berceau, au moins un bras articulé sur une extrémité du demi-collier et sur lequel est fixé au moins un autre berceau, caractérisé en ce qu'au moins deux berceaux (2A, 2B) sont fixés sur le demi-collier rigide (7), en ce qu'il comporte deux bras (5A, 5B) symétriques articulés chacun sur l'une des extrémités du demi-collier, et sur chacun desquels est fixé au moins un autre berceau (2C, 2D), et en ce qu'il comporte en outre un dispositif de liaison (9A, 9B, 10, 11) formé de deux autres bras articulés (9A, 9B) d'une part sur les bras précédents, d'autre part sur un axe (10) sur lequel s'exerce l'effort de traction radial (F) appliquant un serrage sur la tuyauterie indépendamment des dilatations de la tuyauterie.

2. Dispositif selon la revendication 1, caractérisé en ce que le rayon de courbure du profil interne des berceaux (2A, 2B, 2C, 2D) est légèrement supérieur à celui de la tuyauterie à froid.

3. Dispositif selon la revendication 1 ou 2, caractérisé en ce que les berceaux sont revêtus sur leur face de contact avec la tuyauterie d'une couche (8) d'un matériau susceptible d'un écrasement élastique et résistant à la chaleur.

4. Dispositif selon la revendication 3, caractérisé en ce que le matériau susceptible d'un écrasement élastique est un tricot comprimé d'un fil métallique fin.

5. Dispositif selon l'une des revendications 1 à 4, caractérisé en ce que les berceaux sont fixés à pivotement (3A, 3B, 4A, 4B) sur le demi-collier rigide (7) et sur les bras articulés (5A, 5B).

6. Dispositif selon l'une des revendications 1 à 5, caractérisé en ce que les berceaux, le demi-collier et les bras articulés sont disposés à l'intérieur d'un calorifuge (13) entourant la tuyauterie.

7. Dispositif selon l'une des revendications 1 à 6, caractérisé en ce que le dispositif de liaison est relié par une chape (11) à un organe de supportage statique (12).

## Claims

1. A device for supporting a pipe having a low wall thickness in relation to its diameter and being subjected to considerable temperature variations and to a radial traction force (F) of a known direction, comprising support cradles (2A, 2B, 2C, 2d) with an internal profile having a curvature close to that of the pipe, a rigid half-collar (7) arranged around the pipe and spaced away from its periphery and on which at least one of the cradles is fixed, at least one arm articulated on one end of the half-collar and on which at least one other cradle is fixed, characterized in that at least two cradles (2A, 2B) are fixed on the rigid half-collar (7), that it comprises two symmetrical arms (5A, 5B) each articulated on one of the ends of the half-collar, and on each of which is fixed at least one other cradle (2c, 2D), and in that it further comprises a connection device (9A, 9B, 10, 11) consisting of two other arms (9A, 9B) articulated on the one hand on the first arms, on the other hand on an axis (10) on which the radial traction (F) stress is exerted applying a clamping on the pipe independently of the expansions of the pipe.

2. A device according to claim 1, characterized in that the radius of curvature of the inner profile of the cradles (2A, 2B, 2C, 2D) is slightly greater than that of the pipe when cold.

3. A device according to claim 1 or 2, characterized in that the cradles are coated on their surface in contact with the pipe with a layer (8) of an elastic, crushable and heat-resistant material.

4. A device according to claim 3, characterized in that the elastic crushable material is a compressed knit of a fine metallic wire.

5. A device according to one of claims 1 to 4, characterized in that the cradles are fixed pivotably (3A, 3B, 4A, 4B) on the rigid half-collar (7) and on the articulated arms (5A, 5B).

6. A device according to one of claims 1 to 5, characterized in that the cradles, the half-collar and the articulated arms are disposed inside a heat shield (13) surrounding the pipe.

7. A device according to one of claims 1 to 6, characterized in that the connector device is connected to static support components (12) by means of a cap (11).

**Patentansprüche**

1. Vorrichtung zur Halterung einer Rohrleitung mit in Bezug auf ihren Durchmesser geringer Wandstärke, die großen Temperaturunterschieden und einer radialen Zugkraft (F) bekannter Richtung unterliegt, mit Trageschalen (2A, 2B, 2C, 2D), deren inneres Profil einen Krümmungsradius ähnlich dem der Rohrleitung besitzt, mit einem steifen Halbkragen (7), der um die Rohrleitung herum und von ihrem Umfang in Abstand angeordnet ist und auf dem mindestens eine Trageschale befestigt ist, mit mindestens einem Arm, der gelenkig mit einem Ende des Halbkragens verbunden ist und auf dem mindestens eine andere Trageschale befestigt ist, dadurch gekennzeichnet, daß mindestens zwei Trageschalen (2A, 2B) auf dem steifen Halbkragen (7) befestigt sind, daß zwei symmetrische Arme (5A, 5B) vorgesehen sind, die je mit einem der Enden des Halbkragens gelenkig verbunden sind, wobei auf jedem Halbkragen mindestens eine andere Trageschale (2C, 2D) befestigt ist, und daß außerdem eine Verbindungsvorrichtung (9A, 9B, 10, 11) vorhanden ist, die aus zwei weiteren Armen (9A, 9B) besteht, die gelenkig einerseits mit den vorhergehenden Armen und andererseits mit einer Achse (10) verbunden sind, auf die die radiale Zugkraft (F) ausgeübt wird, die die Rohrleitung unabhängig von Dehnungen zusammenpreßt.

2. Vorrichtung nach Anspruch 1, dadurch gekennzeichnet, daß der Krümmungsradius des inneren Profils der Trageschalen (2A, 2B, 2C, 2D) geringfügig größer als der der Rohrleitung im kalten Zustand ist.

3. Vorrichtung nach Anspruch 1 oder 2, dadurch gekennzeichnet, daß die Trageschalen auf ihrer Kontaktseite mit der Rohrleitung mit einer Schicht (8) aus einem Material bedeckt sind, das elastisch zusammengepreßt werden kann und hitzebeständig ist.

4. Vorrichtung nach Anspruch 3, dadurch gekennzeichnet, daß das Material, das elastisch zusammengepreßt werden kann, aus einem komprimierten Gewirk eines feinen Metallfadens besteht.

5. Vorrichtung nach einem der Ansprüche 1 bis 4, dadurch gekennzeichnet, daß die Trageschalen schwenkbar (3A, 3B, 4A, 4B) auf dem steifen Halbkragen (7) und den Gelenkarmen (5A, 5B) befestigt sind.

6. Vorrichtung nach einem der Ansprüche 1 bis 5, dadurch gekennzeichnet, daß die Trageschalen, der Halbkragen und die Gelenkarme im Inneren eines die Rohrleitung umgebenden Wärmeschilds (13) angeordnet sind.

7. Vorrichtung nach einem der Ansprüche 1 bis 6, dadurch gekennzeichnet, daß die Verbindungsvorrichtung über eine Kappe (11) mit einem statischen Halteorgan (12) verbunden ist.